# EUROPEAN PATENT APPLICATION

(11) **EP 1 079 305 A2**
(43) Date of publication of application: **28.02.2001**
(21) Application number: 00118517.2
(22) Date of filing: 25.08.2000
(51) Int. Cl.: G06F 11/34

(54) **USB data monitoring apparatus**

(30) Priority: 26.08.1999 JP 24057099
(71) Applicant: ANDO ELECTRIC CO., LTD., Tokyo 144 (JP)
(72) Inventor: Nagao, Takashi, Ando Electric Co., Ltd., Tokyo (JP); Hata, Gento, Ando Electric Co., Ltd., Tokyo (JP)
(74) Representative: Grünecker, Kinkeldey, Stockmair & Schwanhäusser Anwaltssozietät

(57) **Abstract**

The USB data monitoring apparatus 1 has a synchronization detection circuit 4 to detect the synchronization pattern and a completion detection circuit 5 to detect the completion pattern. According to the synchronization detection signal outputted from the synchronization detection circuit 4 and the completion detection signal outputted from the completion detection circuit 5, a control circuit 7 records only the effective data of the data signal in the memory 8. At that time, an idle time measuring circuit 6 records the idle time just before the data to be recorded is received, in the memory 8, by relating the idle time with the data to be recorded.

## Description

### BACKGROUND OF THE INVENTION

The present invention relates to a USB data monitoring apparatus to monitor the data of the universal serial bus (USB) which connects a personal computer to peripheral equipments.

The universal serial bus (Universal Serial Bus; hereinafter, called USB) is a peripheral device specification which is developed to enhance the degree of freedom of the extendability of the peripheral devices, in personal computers, and the serial interface standard which can be used in common for the communication to various USB correspondent devices such as a key board, mouse, camera, printer, or modem.

Further, the USB is physically a bus of a star-type network structure, and logically, a client software of the host communicates to a device by 1 to 1. In order to realize such the physical and logical connection configuration, the lowest hierarchy protocol communicates in the time division, and the host conducts its scheduling.

To the above various devices, in order to enable the communication without lowering the bus utilization factor and performance, the USB supports the control transfer, bulk transfer, interruption transfer, or isochronous transfer.

The control transfer of the USB is the request response mode communication, in the sudden and aperiodic communication. The bulk transfer of the USB is the data transfer used for the use in which the delay is no problem, in the sudden and aperiodic communication. The interruption transfer of the USB is the communication by which a low aperiodic and low frequency event is communicated from the device to the host. The isochronous transfer of the USB is used for the continuous and periodic communication.

As described above, an object of the USB is to support these transfers, and, by switching the transfer mode, to conduct the data communication without lowering the bus utilization factor and performance.

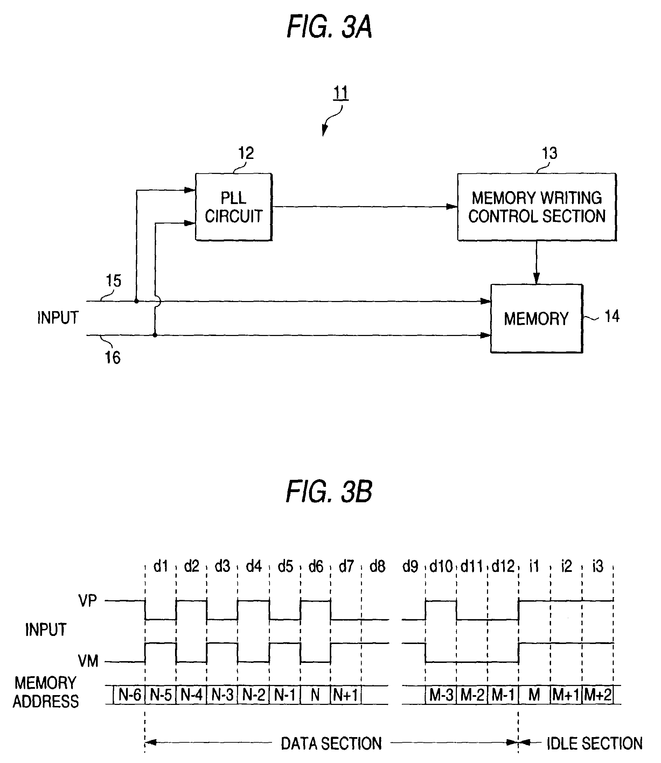

Such the USB data monitoring apparatus according to the conventional technology has the internal structure as shown in Figs. 3A and 3B, and the data on the USB is monitored. Fig. 3A is a view showing the internal structure of a USB data monitoring apparatus 11 according to the conventional technology, and Fig. 3B is a timing chart showing a data monitoring system of the USB data monitoring apparatus 11 according to the conventional technology.

Initially, in the structural view in Fig. 3A, the internal structure of the USB data monitoring apparatus 11 according to the conventional technology, will be described below.

In Fig. 3A, the USB data monitoring apparatus 11 according to the conventional technology is structured by: serial buses 15 and 16; a phase-locked loop circuit 12; a memory writing control section 13; and a memory 14.

The serial buses 15 and 16 are a twist pair wire for inputting data signals VP and VM. In the USB, because the inputted data signal is basically processed as the differential signal, one twist pair wire is used as the bus for the data signal. Accordingly, also in the USB data monitoring apparatus 11, the serial buses 15 and 16 which are the twist pair wires, are used for the inputting data signals VP and VM.

The phase-locked loop (hereinafter, called PLL) circuit 12 detects the transition of the inputted data signal, and generates the data sampling clock. In the USB, the clock to conduct the sampling of the inputted data signal is not outputted. Alternatively, a synchronization pattern is added to the top of the data packet of each signal. Accordingly, in the USB data monitoring apparatus 11, in order to monitor the each data signal, the transition of the differential signal of the inputted data signals VP and VM is detected, and corresponding to that transition, the data sampling clock is generated.

In the order in which the data signal arrives at a memory 14, the memory writing control section 13 generates a memory address to record the arrived data signal in the memory 14.

In the order in which the data signal arrives at the memory 14, the memory 14 records the arrived data signal according to the memory address generated by the memory writing control section 13.

Next, in a timing chart in Fig. 3B, the outline of the operation of the USB data monitoring apparatus 11 having the structure shown in Fig. 3A, will be described.

As shown in Fig. 3B, the data signals VP and VM are inputted into the USB data monitoring apparatus 11. The data signals VP and VM inputted into the USB data monitoring apparatus 11 are differential signals, and the data signals VP and VM are used as the data signal corresponding to the transfer speed mode of the data signal. In the USB data monitoring apparatus 11, because the clock to conduct the sampling on the inputted data signal is not outputted, the transition of the inputted data signal is detected by the PLL circuit 12, and the data sampling clock is generated to the data signal.

The transition of the data signal is detected when the data section is changed from the data section d1 to d2, and in the same manner, when the data section is changed: from the data section d2 to d3; from the data section d3 to d4; from the data section d4 to d5; from the data section d5 to d6; from the data section d6 to d7; from the data section d7 to d8; from the data section d8 to d9; from the data section d9 to d10; from the data section d10 to d11; and from the data section d11 to d12. In the same manner, the transition of the data signal is also detected when the data section is changed: from the data section d12 to an idle section i1; from the idle section i1 to i2; and from the idle section i2 to 13. Then, corresponding to the transition of these detected data signals, the data sampling clock is generated.

Next, the memory writing control section 13 generates a memory address to record the data signal in the memory 14 in the order in which the data signal arrives at the memory 14, corresponding to the generated data sampling clock. When the memory address is generated by the memory writing control section 13, the data signal is recorded in the memory having the generated memory address.

The data signal of the data section d1 is allotted to the memory address "N - 5" by the memory writing control section 13, and stored in the memory 14 having the memory address "N - 5". In the same manner, the data signal of the data section d2 is allotted to "N - 4", the data signal of the data section d3 is allotted to the memory address "N - 3", the data signal of the data section d4 is allotted to the memory address "N - 2", the data signal of the data section d5 is allotted to the memory address "N - 1", the data signal of the data section d6 is allotted to the memory address "N", the data signal of the data section d7 is allotted to the memory address "N + 1", the data signal of the data section d10 is allotted to the memory address "M - 3", the data signal of the data section d11 is allotted to the memory address "M - 2", and the data signal of the data section d12 is allotted to the memory address "M - 1", by the memory writing control section 13, and recorded in the memory 14 having respective memory address.

In the same manner, the data signal of the idle section i1 is allotted to the memory address "M", the data signal of the idle section i2 is allotted to the memory address "M + 1", the data signal of the idle section i3 is allotted to the memory address "M + 2", by the memory writing control section 13, and recorded in the memory 14 having respective memory address.

As described above, in order to enable to communicate with various devices, without lowering the bus utilization factor or performance, the USB supports various transfer modes and switches these transfer modes, however, depending on these transfer modes, the change of the traffic which is an amount of communication of the data signal on the USB, is very large. Further, when the traffic on the USB is small, there is also a case where the data signal during 1 ms is several bytes.

That is, in the USB data monitoring apparatus 11 of the conventional technology, in a method in which the data signal is recorded in the memory 14, because all the received data signal is recorded in the memory 14 as the data, the non-data portion which is intrinsically not necessary, that is, the idle data, is also stored in the memory 14. As the result, the possibility that a great part of the data recorded in the memory 14 is the idle data, which is not necessary, is also generated.

On the one hand, in the method in which the data signal in the USB data monitoring apparatus is recorded in the memory 14, because all the inputted and received data is recorded in the memory 14 as the data, the idle time can be accurately measured.

### SUMMARY OF THE INVENTION

Accordingly, the problem in the present invention is to provide a USB data monitoring apparatus which detects the synchronization pattern and the completion pattern of the inputted data signal, and can record only the effective data in the data signal in the memory.

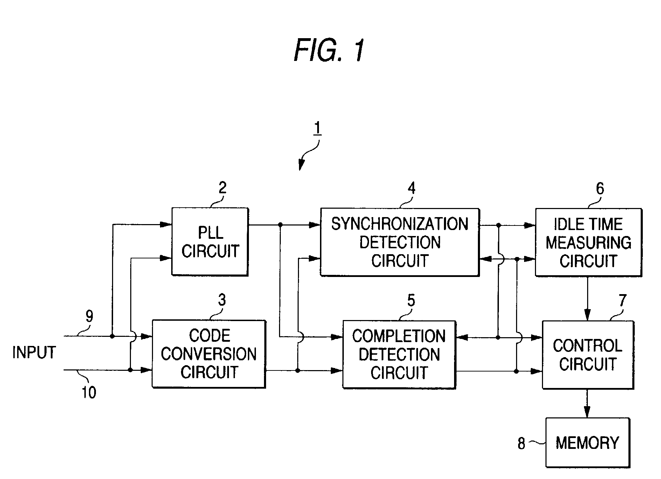

In the invention of the first aspect, in the USB data monitoring apparatus to monitor the data of the universal serial bus (USB), the USB data monitoring apparatus is characterized in that the apparatus has a detection circuit to detect the synchronization pattern and the completion pattern of the data on the USB (for example, the synchronization detection circuit 4 and the completion detection circuit 5, shown in Fig. 1), and according to the synchronization pattern and the completion pattern which are detected by the detection circuit, the data section and the idle section of the data are distinguished from each other, and only the data of the data section is recorded in the memory (for example, memory 8 shown in Fig. 1).

According to the USB data monitoring apparatus of the first aspect of the invention, in the USB data monitoring apparatus to monitor the data of the universal serial bus (USB), the apparatus has a detection circuit to detect the synchronization pattern and the completion pattern of the data on the USB, and according to the synchronization pattern and the completion pattern which are detected by the detection circuit, the data section and the idle section of the data are distinguished from each other, and only the data of the data section is recorded in the memory.

In the USB data monitoring apparatus according to the first aspect of the invention, the invention of the second aspect is characterized in that the detection circuit includes a synchronization detection circuit to detect the synchronization pattern (for example, the synchronization detection circuit shown in Fig. 1) and a completion detection circuit to detect the completion pattern (for example, the completion detection circuit shown in Fig. 1).

According to the USB data monitoring apparatus 1 according to the invention of the second aspect, in the detection circuit, the synchronization detection circuit to detect the synchronization pattern and the completion detection circuit to detect the completion pattern are included.

In the USB data monitoring apparatus according to the invention of the first aspect, the invention of the third aspect is characterized in that, by using the detection circuit (for example, the synchronization detection circuit 4 and the completion detection circuit 5 shown in Fig. 1), the exact idle time of the data is detected (for example, the idle time measuring circuit 6 shown in Fig. 1), and the detected idle time is recorded in the memory (for example, the memory 8 shown in Fig. 1).

According to the USB data monitoring apparatus 1 according to the invention of the third aspect, by using the detection circuit, the exact idle time of the data is detected, and the detected idle time is recorded in the memory.

In the USB data monitoring apparatus according to the invention of the first aspect, the invention of the fourth aspect is characterized in that the data of the data section detected by using the detection circuit (for example, the data detected by using the synchronization detection circuit 4 and the completion detection circuit 5, shown in Fig. 1), and the idle time of the data (for example, the idle time measured by using the idle time measuring circuit 6 shown in Fig. 1) are made to correspond to each other, and recorded in the memory.

According to the USB data monitoring apparatus 1 according to the invention of the fourth aspect, the data of the data section detected by using the detection circuit and the idle time of the data are made to correspond to each other, and recorded in the memory.

In the USB data monitoring apparatus according to the invention of the second aspect, the invention of the fifth aspect is characterized in that the synchronization detection circuit (for example, the synchronization detection circuit 4 shown in Fig. 1) outputs the synchronization detection signal corresponding to the synchronization pattern of the data, and the completion detection circuit (for example, the completion detection circuit 5 shown in Fig. 1) outputs the completion detection signal corresponding to the completion pattern of the data, and a control circuit (for example, the control circuit 7 shown in Fig. 1) which controls the recording of the data in the memory (for example, the memory 8 shown in Fig. 1) according to these outputted signals, is further provided.

According to the USB data monitoring apparatus 1 according to the invention of the fifth aspect, the synchronization detection circuit outputs the synchronization detection signal corresponding to the synchronization pattern of the data, and the completion detection circuit outputs the completion detection signal corresponding to the completion pattern of the data, and the control circuit which controls the recording of the data in the memory according to these outputted signals, is further provided.

Accordingly, according to the invention of the first, second, and fifth aspect, the synchronization detection circuit outputs the synchronization detection signal corresponding to the synchronization pattern, and the completion detection circuit outputs the completion detection signal corresponding to the completion pattern, and according to outputted synchronization detection signal and the completion detection signal, the control circuit controls the recording of the data in the memory, thereby, only the effective portion of the data can be recorded in the memory. Accordingly, the recording efficiency of the data into memory when the traffic of the data is small on the USB, can be increased.

According to the invention of the third aspect and fourth aspect, according to the synchronization detection signal outputted from the synchronization detection circuit, and the completion detection signal outputted from the completion detection circuit, the idle time of the data is measured, thereby, in the same manner as in the case where all of the data are recorded in the memory, the idle time of the data can be accurately recorded in the memory. Accordingly, the idle time just before the data to be recorded in the memory, is received, can be made to correspond to the data and recorded, and the analysis of the data can be conducted easily.

### BRIEF DESCRIPTION OF THE DRAWINGS

Fig. 1 is a view showing an internal structure of a USB data monitoring apparatus 1 according to the embodiment of the present invention.
Fig. 2 is a timing chart showing an outline of the operation of the USB data monitoring apparatus 1 shown in Fig. 1.
Fig. 3A is a view showing the internal structure of the USB data monitoring apparatus 11 according to the conventional technology, and Fig. 3B is a timing chart showing the outline of the operation of the USB data monitoring apparatus 11 shown in Fig. 3A.

### DETAILED DESCRIPTION OF THE PREFERRED EMBODIMENTS

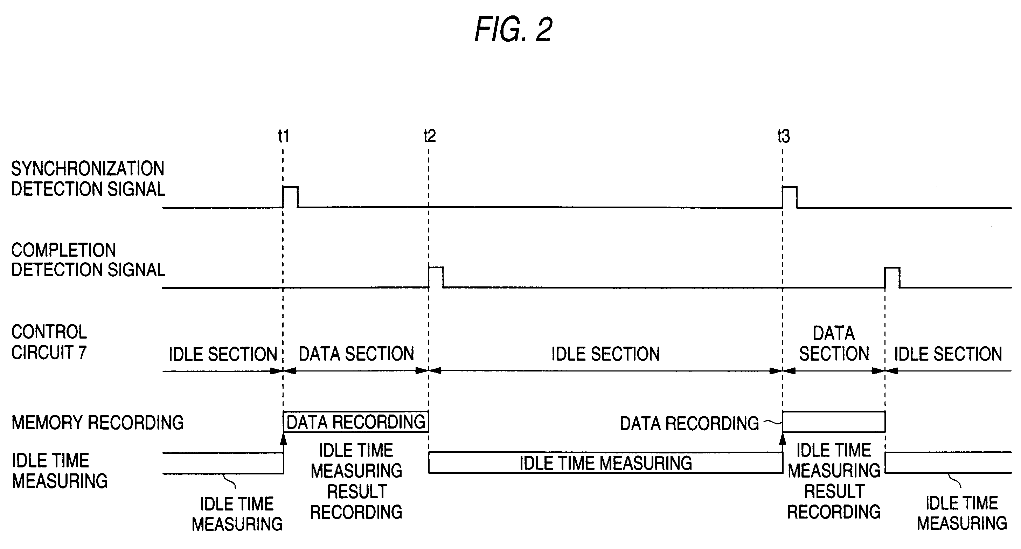

Referring to Fig. 1 and Fig. 2, an embodiment of a USB data monitoring apparatus of the present invention will be described below.

Fig. 1 is a view showing the internal structure of the USB data monitoring apparatus 1 of the present embodiment, and Fig. 2 is a timing chart showing the data monitoring system of the USB data monitoring apparatus 1 of the present embodiment shown in Fig. 1.

This USB data monitoring apparatus 1 is provided with the synchronization detection circuit 4 to detect the synchronization pattern, and the completion detection circuit 5 to detect the completion pattern. According to the synchronization detection signal outputted from the synchronization detection circuit 4, and the completion detection signal outputted from the completion detection circuit 5, the control circuit 7 records only the effective data of the data signal in the memory 8. In this case, the idle time measuring circuit 6 records the idle time just before the data to be recorded is received, in the memory 8, by relating the idle time to the data to be recorded.

Initially, the structure will be described.

Fig. 1 is a view showing the internal structure of the USB data monitoring apparatus 1 of the present embodiment.

In Fig. 1, the USB data monitoring apparatus 1 of the present embodiment is structured by: serial buses 9 and 10; a phase-locked loop circuit 2; code conversion circuit 3; synchronization detection circuit 4; completion detection circuit 5; idle time measuring circuit 6; control circuit 7; and memory 8.

The serial buses 9 and 10 are, in the same manner as in the case of the USB data monitoring apparatus 11 of the conventional technology, the twist pair wire of the inputted data signals. In also the USB data monitoring apparatus 1 of the present embodiment, the inputted data signal is processed as the differential signal. Accordingly, corresponding to the transfer speed mode of the data signal of the USB data monitoring apparatus 1, the polarity of the differential signal of the data signal inputted through the serial buses 9 and 10 which are the twist pair wires, is selected in the code conversion circuit 3, and processed.

The phase-locked loop (hereinafter, called PLL) circuit 2 detects the transition of the inputted data signal, and generates the data sampling clock. Also on the USB in the USB data monitoring apparatus 1 of the present embodiemnt, the clock to conduct the sampling of the inputted data signal is not outputted. Alternatively, a synchronization pattern is added to the top of the data packet of each data signal. Accordingly, in order to monitor the each data signal, the transition of the inputted data signals is detected, and corresponding to that transition, the data sampling clock is generated.

The code conversion circuit 3 decodes the NRZI data signal coded by the coding method of NRZI (Non Return to Zero Invert) to the NRZ signal, and outputs it to the synchronization detection circuit 4 and the completion detection circuit 5, which will be described later. On the USB, the data row of the data signal is finally coded by the coding method of this NRZI. Accordingly, also on the USB in the USB data monitoring apparatus 1 of the present embodiment, the data row of the data signal is coded by the coding method of NRZI. Accordingly, after the synchronization pattern and the completion pattern are detected from the inputted data signal, by the synchronization detection circuit 4 and the completion detection circuit 5, which will be described later, the data portion is decoded in this code conversion circuit 3, that is, the coded NRZI data signal is decoded to the NRZ data signal.

In the USB data monitoring apparatus 11 of the conventional technology shown in Fig. 3A, the code conversion circuit is not included in the components, however, the code conversion circuit may also be a component, and there is also a case in which the code conversion circuit is included as the component.

The synchronization detection circuit 4 detects the synchronization pattern from the inputted data signal. As described above, on the USB of the USB data monitoring apparatus 1, the synchronization pattern, not the clock to conduct the sampling, is added to the top of the data packet of each data signal. This synchronization detection circuit 4 detects this synchronization pattern added to the data signal, and outputs the synchronization detection signal to the idle time measuring circuit 6 and the control circuit 7, which will be described later.

The completion detection circuit 5 detects the completion pattern from the inputted data signal. In the same manner as in the case of the above synchronization detection circuit 4, the completion detection circuit 5 detects the completion pattern added to the data signal, and outputs the completion detection signal to the idle time measuring circuit 6 and the control circuit 7, which will be described later.

According to the synchronization detection signal outputted from the above synchronization detection circuit 4, and the completion detection signal outputted from the completion detection circuit 5, the idle time measuring circuit 6 starts the measurement of the idle time, or stops the measurement, and exactly measures the idle time, and outputs it to the control circuit 7 which will be described later.

According to the synchronization detection signal outputted from the above synchronization detection circuit 4, and the completion detection signal outputted from the completion detection circuit 5, the control circuit 7 controls the start and the completion of the record in which only the effective data in the data signal is recorded in the memory 8.

In the memory 8, the recording start and completion of the data signal are controlled by the control circuit 7, and the memory 8 records only the effective data in the data signal.

Next, the operation will be described. Fig. 2 is a timing chart showing the outline of the operation of the USB data monitoring apparatus 1 shown in Fig. 1.

When the data signal is inputted into the USB data monitoring apparatus 1, the data signal is inputted into the PLL circuit 2 and the code conversion circuit 3 through the serial buses 9 and 10. When the data signal is inputted into the PLL circuit 2, the PLL circuit 2 detects the transition of the inputted data signal, and generates the data sampling clock to the data signal. Further, when the data signal is inputted into the code conversion circuit 3, the code conversion circuit 3 decodes the NRZI data signal coded by the NRZI coding method to the NRZ data signal. Then, 2 data signals respectively outputted from the PLL circuit 2 and the code conversion circuit 3, are inputted into the synchronization detection circuit 4 and the completion detection circuit 5.

Next, as shown in Fig. 2, in the USB data monitoring apparatus 1, when the data signals respectively outputted from the PLL circuit 2 and the code conversion circuit 3 are inputted into the synchronization detection circuit 4, the synchronization detection circuit 4 detects the synchronization pattern from the inputted data signals, and outputs the synchronization detection signal. In the same manner, when the data signals respectively outputted from the PLL circuit 2 and the code conversion circuit 3 are inputted into the completion detection circuit 5, the completion detection circuit 5 detects the completion pattern from the inputted data signals, and outputs the completion detection signal. Then, the synchronization detection signal and the completion detection signal outputted from the synchronization detection circuit 4 and the completion detection circuit 5 are respectively inputted into the idle time measuring circuit 6 and the control circuit 7.

When the control circuit 7 receives the synchronization detection signal outputted from the synchronization detection circuit 4 (t1 in Fig. 2), the control circuit 7 judges that the data signal exists in the data section, and starts the recording of the data in the memory 8. The storing of the data in the memory 8 is continued until the control circuit 7 receives the completion detection signal, and when the control circuit 7 receives the completion detection signal outputted from the completion detection circuit 5 (t2 in Fig. 2), the control circuit 7 judges that the data signal transfers from the data section to the idle section, and interrupts the recording of the data in the memory 8.

When the idle time measuring circuit 6 receives the completion detection signal outputted from the completion detection circuit 5 (t2 in Fig. 2), the idle time measuring circuit 6 judges that the data signal enters in the idle section, and clears the idle time measurement, and starts the idle time measurement. Then, the idle time measurement is continued until the idle time measuring circuit 6 receives the synchronization detection signal, and when the idle time measuring circuit 6 receives the synchronization detection signal outputted from the synchronization detection circuit 4 (t3 in Fig. 2), the idle time measuring circuit 6 judges that the data signal transfers from the idle section to the data section, and stops the idle time measurement, and outputs the idle time measurement result to the control circuit 7, and records it in the memory 8.

When the idle time measurement result is recorded in the memory 8, the idle time measurement result and the data of the data signal in the data section after the idle section specified by the idle time measurement result are related to each other, and recorded in the memory 8, thereby, the record of the idle time just before the effective data of the data signal is received, becomes possible.

As described above, the USB data monitoring apparatus 1 in the embodiment to which the present invention is applied, is provided with the synchronization detection circuit 4 to detect the synchronization pattern, and the completion detection circuit 5 to detect the completion pattern. According to the synchronization detection signal outputted from the synchronization detection circuit 4, and the completion detection signal outputted from the completion detection circuit 5, the control circuit 7 records only the effective data of the data signal in the memory 7. In that case, the idle time measuring circuit 6 records the idle time just before the data to be recorded is received, in the memory 8, by relating the idle time with the data to be recorded.

Accordingly, the synchronization detection circuit outputs the synchronization detection signal corresponding to the synchronization pattern, and the completion detection circuit outputs the completion detection signal corresponding to the completion pattern, and according to the outputted synchronization detection signal and completion detection signal, the control signal controls the recording of the data signal in the memory, thereby, only the effective data of the data signal can be recorded in the memory. Accordingly, when the traffic of the data signal on the USB is small, the recording efficiency of the data in the memory can be increased.

According to the outputted synchronization detection signal and completion detection signal, when the idle time measuring circuit measures the idle time of the data signal, in the same manner as in the case where all of the data signal is recorded in the memory as the data, the idle time of the data signal can be accurately recorded in the memory. Accordingly, the idle time just before the data to be recorded in the memory is received, can be recorded by relating the idle time with the data, thereby, the analysis of the data can be made easy.

Incidentally, the present invention is not limited to the contents of the above embodiment, but can be varied within the range which does not depart from the sprit of the present invention. For example, the information added to each data signal by the PLL circuit is the synchronization pattern added to the top of the data packet of each data signal, however, the present invention is not limited to this. A characteristic flag is added to each data, in such a manner that a flag is added to the top of the token of each data, and according to the added flag, the analysis of each data signal may be conducted.

Further, in the present embodiment, the memory is used as the recording medium, however, a hard disk may be used, and when the hard disk is used as the recording medium, the larger capacity of data can be recorded.

According to the USB data monitoring apparatus of the invention according to the first, second and fifth aspects of the invention, the synchronization detection circuit outputs the synchronization detection signal corresponding to the synchronization pattern, and the completion detection circuit outputs the completion detection signal corresponding to the completion pattern, and according to the outputted synchronization detection signal and completion detection signal, the control circuit controls the recording of the data in the memory, thereby, only the effective part of the data can be recorded in the memory. Accordingly, when the traffic of the data is small on the USB, the recording efficiency of the data in the memory cab be increased.

According to the USB data monitoring apparatus of the invention according to the third and fourth aspects of the invention, according to the synchronization detection signal outputted from the synchronization detection circuit, and the completion detection signal outputted from the completion detection circuit, the idle time of the data is measured, thereby, in the same manner as in the case where all of the data are recorded in the memory, the idle time of the data can be accurately recorded in the memory. Accordingly, the idle time just before the data to be recorded in the memory is received, can be recorded by making it correspond to the data, and thereby, the analysis of the data can be made easy.

## Claims

1. A USB data monitoring apparatus in which the data of the universal serial bus (USB) is monitored, comprising:
a detection circuit to detect a synchronization pattern and a completion pattern of the data on said USB, wherein
according to the synchronization pattern and the completion pattern, which are detected by said detection circuit,
a data section and an idle section of the data are distinguished from each other, and only the data of the data section is recorded in a memory.

2. The USB data monitoring apparatus according to Claim 1, wherein
said detection circuit includes;
a synchronization detection circuit to detect the synchronization pattern, and
a completion detection circuit to detect the completion pattern.

3. The USB data monitoring apparatus according to Claim 1, wherein
the exact idle time of the data is detected by using said detection circuit, and
the detected idle time is recorded in said memory.

4. The USB data monitoring apparatus according to Claim 1, wherein
the data of the data section detected by using said detection circuit is made to correspond to the idle time of the data to record in said memory.

5. The USB data monitoring apparatus according to Claim 2, wherein
said synchronization detection circuit outputs a synchronization detection signal corresponding to the synchronization pattern of the data, and
said completion detection circuit outputs a completion detection signal corresponding to the completion pattern of the data,
said USB data monitoring apparatus further comprising:
a control circuit to conduct the recording control of the data into the memory according to these outputted signals.
